(19) Europäisches Patentamt / European Patent Office / Office européen des brevets

(11) **EP 2 582 136 A1**

(12) **EUROPEAN PATENT APPLICATION**

(43) Date of publication:
**17.04.2013 Bulletin 2013/16**

(51) Int Cl.:
*H04N 7/26* (2006.01)  *G06K 9/46* (2006.01)
*G06T 7/40* (2006.01)  *G06T 7/00* (2006.01)

(21) Application number: **12183905.4**

(22) Date of filing: **11.09.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.10.2011 EP 11306322**

(71) Applicant: **Thomson Licensing**
**92130 Issy-les-Moulineaux (FR)**

(72) Inventors:
• **Urban, Fabrice**
  **35576 CESSON SEVIGNE (FR)**
• **Chamaret, Christel**
  **35576 CESSON SEVIGNE (FR)**
• **Chevance, Christophe**
  **35576 CESSON SEVIGNE (FR)**

(74) Representative: **Lorette, Anne**
**Technicolor**
**1-5 Rue Jeanne d'Arc**
**92130 Issy-les-Moulineaux (FR)**

(54) **Saliency value determination of predictively encoded video streams**

(57)    The invention is made in the field of saliency determination for videos block-wise predictive encoded in a data stream.

A method is proposed which comprises using processing means for determining coding costs of transformed residuals of blocks and using the determined coding costs for determining the saliency map.

Coding costs of transformed block residuals depend on the vividness of content depicted in the blocks as well as on how-well the blocks are predicted and therefore are good indicators for saliency.

Fig. 4

**(Cont. next page)**

Fig. 7

**Description**

TECHNICAL FIELD

The invention is made in the field of saliency determination for videos.

BACKGROUND OF THE INVENTION

Detecting in videos image frame locations of increased interest or features of remarkability, also called salient features, has many real-world applications. For instance, it can be applied to computer vision tasks such as navigational assistance, robot control, surveillance systems, object detection and recognition, and scene understanding. Such predictions also find applications in other areas including advertising design, image and video compression, image and video repurposing, pictorial database querying, and gaze animation.

Some prior art visual attention computational models compute a saliency map from low-level features of source data such as colour, intensity, contrast, orientations, motion and other statistical analysis of the input image or video signal.

For instance, Bruce, NDB, and Tsotsos, JK: "Saliency based on information maximization", In: Advances in neural information processing systems. p. 155-162, 2006, propose a model of bottom-up overt attention maximizing information sampled from a scene.

Itti L., Koch C., and Niebur E.: "Model of saliency-based visual attention for rapid scene analysis", IEEE Trans Pattern Anal Mach Intell. 20(11):1254-9, 1998, present a visual attention system, inspired by the behavior and the neuronal architecture of the early primate visual system. The system breaks down the complex problem of scene understanding by rapidly selecting, in a computationally efficient manner, conspicuous locations to be analyzed in detail.

Fabrice U. et al.: "Medium Spatial Frequencies, a Strong Predictor of Salience", In: Cognitive Computation. Volume 3, Number 1, 37-47, 2011, found that medium frequencies globally allowed the best prediction of attention, with fixation locations being found more predictable using medium to high frequencies in man-made street scenes and using low to medium frequencies in natural landscape scenes.

SUMMARY OF THE INVENTION

The inventors realized that prior art saliency determination methods and devices for compress-encoded video material require decoding the material, although, the material usually is compressed -based on spatial transforms, spatial and temporal predictions, and motion information- in a way preserving remarkable features and information in location of increased interest, and therefore already contains some saliency information which gets lost in the decoding.

Therefore, the inventors propose extracting saliency information from the compressed video to yield a low-computational cost saliency model. Computation cost reduction is based on reusing data available due to encoding.

That is, the inventors propose a method according to claim 1 and a device according to claim 2 for determining a saliency value of a block of a video frame block-wise predictive encoded in a data stream. Said method comprises using processing means for determining coding cost of a transformed residual of the block and using the determined coding cost for determining the saliency value.

Coding cost of a transformed block residual depends on the vividness of content depicted in the block as well as on how well the block is predicted. Coding cost is therefore a good indication for saliency.

In an embodiment, the block is intra-predictive encoded and determining the coding cost comprises determining using a rho-domain model.

In a further embodiment, the block is inter-predictive encoded and determining the coding cost comprises determining coding cost of a transformed residual of a reference block used for inter-prediction of said block.

In a yet further embodiment, the determined coding cost of the reference block is weighted with a size of the block.

In a even yet further embodiment, coding cost of a motion vector of the block is yet further used for determining the saliency value.

In another even yet further embodiment, the determined coding cost is normalized and the normalized coding cost is used for determining the saliency value.

Given the block is encoded in Direct/Skip mode an attenuation value can be further used for determining the saliency value.

The features of further advantageous embodiments are specified in the dependent claims.

BRIEF DESCRIPTION OF THE DRAWINGS

Exemplary embodiments of the invention are illustrated in the drawings and are explained in more detail in the following description. The exemplary embodiments are explained only for elucidating the invention, but not for limiting the invention's disclosure or scope defined in the claims.

In the figures:

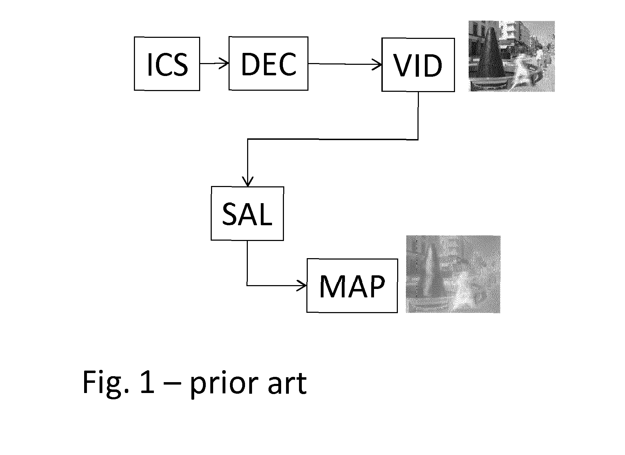

Fig. 1     depicts an exemplary flowchart of prior art derivation of a saliency map;

Fig. 2     depicts an exemplary flowchart of a first embodiment of derivation of a saliency map from a compressed video stream by deriving, from the stream, a spatial saliency map;

Fig. 3     depicts an exemplary flowchart of a second embodiment of derivation of a saliency map from a compressed video stream by deriving, from the stream, a temporal saliency map;

Fig. 4     depicts an exemplary flowchart of a third embodiment of derivation of a saliency map from a compressed video stream by deriving, from the stream, a spatial saliency map and a temporal saliency map and fusion of the derived maps;

Fig. 5     depicts an exemplary flowchart of derivation of the spatial saliency map from the compressed video stream;

Fig. 6     depicts an exemplary flowchart of derivation of the temporal saliency map from the compressed video stream; and

Fig. 7     depicts an exemplary flowchart of fusion of the spatial saliency map with the temporal saliency map.

<u>EXEMPLARY EMBODIMENTS OF THE INVENTION</u>

The invention may be realized on any electronic device comprising a processing device correspondingly adapted. The invention is in particular useful on low-power devices where a saliency-based application is needed but not restricted thereto. For instance, the invention may be realized in a set-top-box, a tablet, a gateway, a television, a mobile video phone, a personal computer, a digital video camera or a car entertainment system.

The current invention discloses and exploits the fact that encoded streams already contain information that can be used to derive a saliency map with little additional computational cost. The information can be extracted by a video decoder during full decoding. Or a partial decoder could be implemented which only parses of the video stream without a completely decoding it.

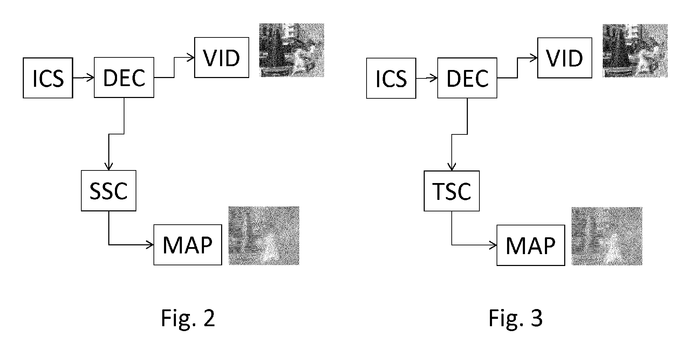

In a first exemplary embodiment depicted in fig. 2, the computation of a saliency map MAP comprises a spatial saliency map computation SSC, only.

In a second exemplary embodiment depicted in fig. 3, the computation of a saliency map MAP comprises a temporal saliency map computation TSC, only.

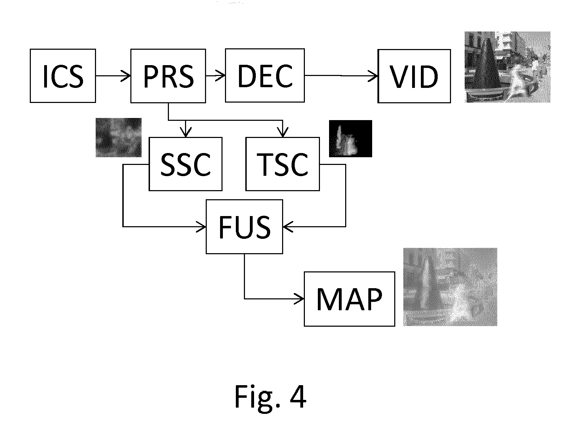

In a third exemplary embodiment depicted in figure 4, the computation of a saliency map MAP comprises a spatial saliency map computation SSC, a temporal saliency map computation TSC and a fusion FUS of the computed spatial saliency map with the computed temporal saliency map.

The spatial and/or the temporal saliency map computed in the first, in the second and in the third exemplary embodiment are computed from information available from the incoming compressed stream ICS without fully decoding DEC the video VID encoded in the incoming compressed stream ICS.

The invention is not restricted to a specific coding scheme. The incoming compressed stream ICS can be compressed using any predictive encoding scheme, for instance, H.264/MPEG-4 AVC, MPEg-2, or other.

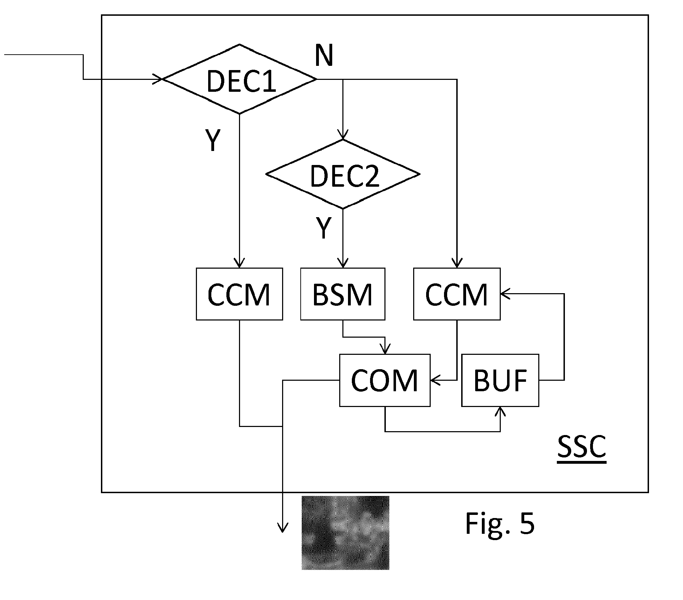

In the different exemplary embodiments, spatial saliency map computation SCC is based on coding cost estimation. Z. He: "p-domain rate-distortion analysis and rate control for visual coding and communication", Santa Barbara, PhD-Thesis, University of California, 2001, describes that the number of non-zero transform coefficients of a transform of a block is proportional to the coding cost of the block. The spatial saliency map computation SCC exemplarily depicted in Fig. 5 exploits this fact and assigns intra-coded blocks saliency values determined using coding costs of these blocks, the coding cost being determined using a rho-domain model as described by He.

Since most of the time only relative saliency is of importance, the saliency map can be normalized.

Besides the coding cost, block sizes can be further used for determining saliency values. Smaller block sizes are commonly associated with edges of objects and are thus of interest. The macro-block cost map is augmented with the number of decomposition into smaller blocks. For example the cost value for each block is doubled in case of sub-block decomposition.

For blocks encoded using inter-prediction or bi-prediction, motion information can be extracted from the stream and in turn used for motion compensation of the spatial saliency map determined for the one or more reference images used for inter-prediction or bi-prediction.

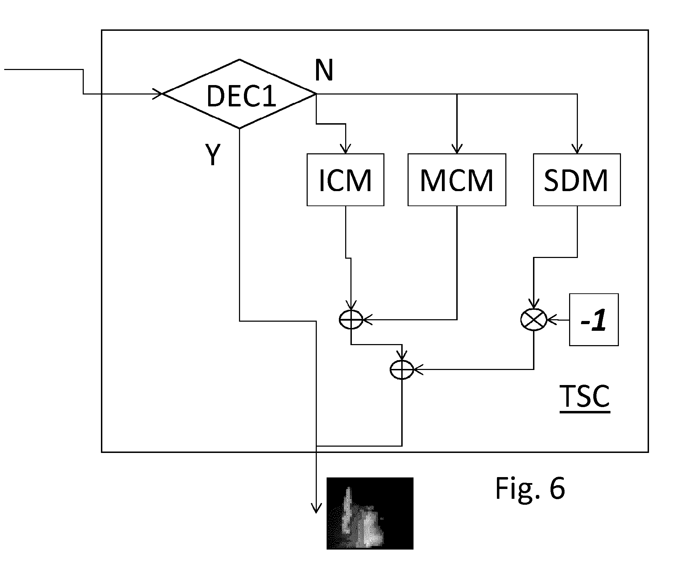

The temporal saliency computation TSC is based on motion information as exemplarily depicted in Fig. 6. Thus, it is determined for inter-predicted or bi-predicted frames, only. Within inter- or bi-predicted frames, intra-coded macroblocks represent areas that are uncovered or show such high motion that they are not well predictable by inter- or bi-prediction. In an exemplary embodiment, a binary intra-coded blocks map ICM is used for determining the temporal saliency map. In the binary intra-coded blocks map, each intra block takes the value 1, for instance.

Since motion vectors representing outstanding, attention catching motion cannot be predicted well and therefore require significantly more bits for encoding, a motion vector coding cost map MCM is further used for determining the temporal saliency map.

Motion vector coding cost map MCM and intra-coded blocks map ICM are normalized and added. The temporal saliency values assigned to blocks in the resulting map can be attenuated for those blocks being coded in SKIP or DIRECT mode. For instance, coding costs of SKIP or DIRCET mode encoded blocks are weighted by a factor 0.5 while coding costs of blocks encoded in other modes remain unchanged.

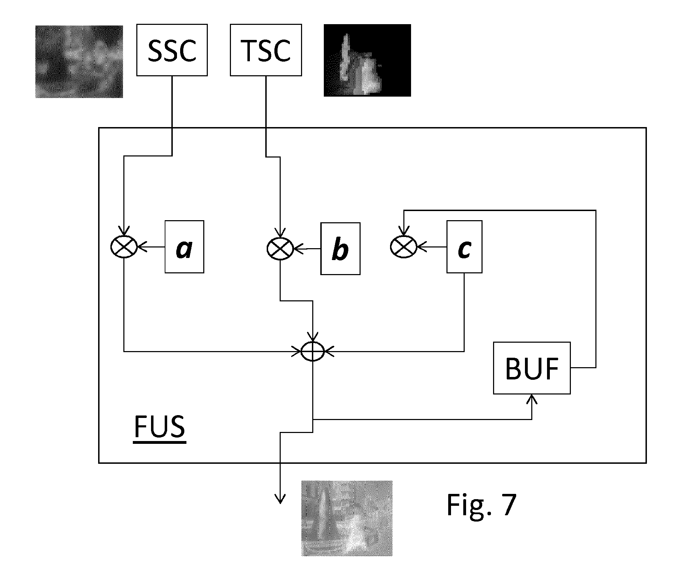

Fusion FUS of saliency maps resulting from spatial saliency computation SSC and temporal saliency computation TSC can be a simple addition. Or, as exemplarily depicted In Fig. 7, spatial saliency map and temporal saliency map are weighted with weights **a, b** before being added. Weight **a** depends on the relative amount of intra-coded blocks in the frame and weight **b** depends on the relative amount of inter- or bi-predictive blocks (P or B) in the frame. Fusion FUS can also use a previous saliency map of a previous frame weighted with weight c depending on bit-rate variation and the coding type.

The inventors experiments showed that the following exemplary values for **a, b,** and **c** produced good results:

$$a = \frac{1}{12} + \frac{number\_of\_I\_MB}{4 \times number\_of\_MB}, \qquad b = \frac{1}{12} + \frac{number\_of\_P\_MB + number\_of\_B\_MB}{4 \times number\_of\_MB}$$

$$c = \frac{1}{12} + \frac{f(bitRate, type)}{4}$$

wherein

$$f(bitRate, type) = \frac{1}{2} + \Delta bitRate$$

for bi-predicted frames (B-frames)

$$f(bitRate, type) = \frac{1}{4} + \Delta bitRate$$

for inter-predicted frames (P-Frames)

$$f(bitRate, type) = \frac{1}{8} + \Delta bitRate$$

for intra-predicted frames (I-frames)

**Claims**

1. Method for determining a saliency value of a block of a video frame block-wise predictive encoded in a data stream, said method comprising using processing means for:

   determining coding cost of a transformed residual of the block and using the determined coding cost for determining the saliency value.

2. Device for determining a saliency value of a block of a video frame block-wise predictive encoded in a data stream, said device comprising processing means adapted for:

   determining coding cost of a transformed residual of the block and using the determined coding cost for determining the saliency value.

3. Method of claim 1 or device of claim 2 wherein the block is intra-predictive encoded and determining the coding cost comprises determining using a rho-domain model.

4. Method of claim 1 or device of claim 2 wherein the block is inter-predictive encoded and determining the coding cost comprises determining coding cost of a transformed residual of a reference block used for inter-prediction of said block.

5. Method of claim 4, further using the processing means for weighting the determined coding cost of the reference block with a size of the block.

6. Method of claim 3 or 4, comprising further using coding cost of a motion vector of the block for determining the saliency value.

7. Method of one of claims 1 and 3-6 further using the processing means normalizing the determined coding cost and using the normalized coding cost for determining the saliency value.

8. Device of claim 4, wherein the processing means are further adapted for weighting the determined coding cost of the reference block with a size of the block.

9. Device of claim 3 or 4, the processing means being adapted for further using coding cost of a motion vector of the block for determining the saliency value.

10. Device of one of claims 2-5, 8 and 9 the processing means being adapted for normalizing the determined coding cost and for using the normalized coding cost for determining the saliency value.

11. Method of claim 4, 5 or 6, further using the processing means for determining whether the block is encoded in Direct/Skip mode wherein an attenuation value is further used for determining the saliency value in case the block is encoded in Direct/Skip mode.

12. Device of claim 4, 5 or 8, the processing means being adapted for determining whether the block is encoded in Direct/Skip mode wherein an attenuation value is further used for determining the saliency value in case the block is encoded in Direct/Skip mode.

Fig. 1 – prior art

Fig. 2

Fig. 3

Fig. 4

Fig. 5

Fig. 6

Fig. 7

## EUROPEAN SEARCH REPORT

Application Number

EP 12 18 3905

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI ET AL: "Visual Saliency Based on Conditional Entropy", LECTURE NOTES IN COMPUTER SCIENCE, SPRINGER, DE , vol. 5994 1 January 2009 (2009-01-01), pages 246-257, XP007919971, DOI: 10.1007/978-3-642-12307-8_23 ISBN: 978-3-642-12306-1 Retrieved from the Internet: URL:http://dx.doi.org/10.1007/978-3-642-12307-8_23 [retrieved on 2010-01-01] * abstract * * page 248 - page 250 * ----- | 1-12 | INV. H04N7/26 G06K9/46 G06T7/40 G06T7/00 |
| A,D | HE Z: "Rho-Domain Rate-Distortion Analysis and Rate Control for Visual Coding", THESIS UNIVERSITY OF CALIFORNIA, XX, XX, 1 June 2001 (2001-06-01), pages 1-138, XP002348975, * last paragraph * * page 21, line 2 - line 10 * * page 27, last paragraph * * page 29, paragraph 1 - page 35, paragraph 2 * ----- -/-- | 1-12 | TECHNICAL FIELDS SEARCHED (IPC) G06T H04N G06K |

The present search report has been drawn up for all claims

| Place of search | Date of completion of the search | Examiner |
|---|---|---|
| Berlin | 23 October 2012 | Gries, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

Europäisches Patentamt
European Patent Office
Office européen des brevets

# EUROPEAN SEARCH REPORT

Application Number

EP 12 18 3905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | BRUCE ET AL: "Saliency based on information maximization", ADVANCES IN NEURAL INFORMATION PROCESSING SYSTEMS, MORGAN KAUFMANN PUBLISHERS, INC, US , vol. 18 1 June 2006 (2006-06-01), pages 155-162, XP007919947, ISSN: 1049-5258 Retrieved from the Internet: URL:http://www-sop.inria.fr/members/Neil.Bruce/NIPS2005_0081.pdf [retrieved on 2011-12-21] * the whole document * ----- | 1-12 | |
| A,D | ITTI L ET AL: "A MODEL OF SALIENCY-BASED VISUAL ATTENTION FOR RAPID SCENE ANALYSIS", IEEE TRANSACTIONS ON PATTERN ANALYSIS AND MACHINE INTELLIGENCE, IEEE SERVICE CENTER, LOS ALAMITOS, CA, US, vol. 20, no. 11, 1 November 1998 (1998-11-01), pages 1254-1259, XP001203933, ISSN: 0162-8828, DOI: 10.1109/34.730558 * the whole document * ----- | 1-12 | TECHNICAL FIELDS SEARCHED (IPC) |
| A,D | URBAN F ET AL: "Medium spatial frequencies, a strong predictor of salience", COGNITIVE COMPUTATION, 23 November 2010 (2010-11-23), pages 1-11, XP008134126, ISSN: 1866-9956, DOI: 10.1007/S12559-010-9086-8 [retrieved on 2010-11-23] * the whole document * ----- -/-- | 1-12 | |

The present search report has been drawn up for all claims

| Place of search | Date of completion of the search | Examiner |
|---|---|---|
| Berlin | 23 October 2012 | Gries, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 12 18 3905

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HOU XIAODI ET AL: "Dynamic Visual Attention: Searching for coding length increments", NEURAL INFORMATION PROCESSING SYSTEMS NIPS 2008 08.-11.12.2008, VANCOUVER, 2008, MIT PRESS, US , 8 December 2008 (2008-12-08), pages 1-8, XP007919977, Retrieved from the Internet: URL:http://bcmi.sjtu.edu.cn/~zhangliqing/P apers/2008NIPS_0142_Hou_Download.p [retrieved on 2011-12-21] * abstract * * page 2, paragraph 6 * * 2.2 The Incremental Coding Length; page 3 * * 4. Discussions; page 7 * ----- | 1-12 | |
| A | ALATAS O ET AL: "Video Compression Using Structural Flow", IMAGE PROCESSING,2005. ICIP 2005, IEEE, US, vol. 3, 11 September 2005 (2005-09-11), pages 245-248, XP010851442, DOI: 10.1109/ICIP.2005.1530374 ISBN: 978-0-7803-9134-5 * page 247, right-hand column, line 4 - line 6 * ----- -/-- | 1-12 | TECHNICAL FIELDS SEARCHED (IPC) |

The present search report has been drawn up for all claims

| Place of search | Date of completion of the search | Examiner |
|---|---|---|
| Berlin | 23 October 2012 | Gries, Thomas |

EPO FORM 1503 03.82 (P04C01)

Europäisches
Patentamt

European
Patent Office

Office européen
des brevets

# EUROPEAN SEARCH REPORT

**Application Number**

EP 12 18 3905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | STEPHANE MALLAT ET AL: "Analysis of Low Bit Rate Image Transform Coding", IEEE TRANSACTIONS ON SIGNAL PROCESSING, IEEE SERVICE CENTER, NEW YORK, NY, US, vol. 46, no. 4, 1 April 1998 (1998-04-01), XP011058113, ISSN: 1053-587X * page 1031, left-hand column, paragraph 2 - paragraph 3 * | 1-12 | |
| A | US 2009/110269 A1 (LE MEUR OLIVIER [FR] ET AL) 30 April 2009 (2009-04-30) * abstract * * paragraph [0007] - paragraph [0008] * | 1-12 | |
| A | US 2004/088726 A1 (MA YU-FEI [CN] ET AL) 6 May 2004 (2004-05-06) * the whole document * | 1-12 | |
| A | JUNCHI YAN ET AL: "Visual Saliency Detection via Sparsity Pursuit", IEEE SIGNAL PROCESSING LETTERS, IEEE SERVICE CENTER, PISCATAWAY, NJ, US, vol. 17, no. 8, 1 August 2010 (2010-08-01), pages 739-742, XP011311748, ISSN: 1070-9908 * A. Saliency as Sparse Component. B. Sparse Coding Scheme in Feature Space; page 740, left-hand column - page 741, left-hand column, paragraph 4 * | 1-12 | **TECHNICAL FIELDS SEARCHED (IPC)** |

-/--

The present search report has been drawn up for all claims

| Place of search | Date of completion of the search | Examiner |
|---|---|---|
| Berlin | 23 October 2012 | Gries, Thomas |

EPO FORM 1503 03.82 (P04C01)

**EUROPEAN SEARCH REPORT**

Application Number

EP 12 18 3905

**DOCUMENTS CONSIDERED TO BE RELEVANT**

| Category | Citation of document with indication, where appropriate, of relevant passages | Relevant to claim | CLASSIFICATION OF THE APPLICATION (IPC) |
|---|---|---|---|
| A | JUNCHI YAN ET AL: "Visual saliency detection via rank-sparsity decomposition", IMAGE PROCESSING (ICIP), 2010 17TH IEEE INTERNATIONAL CONFERENCE ON, IEEE, PISCATAWAY, NJ, USA, 26 September 2010 (2010-09-26), pages 1089-1092, XP031813743, ISBN: 978-1-4244-7992-4 * page 1090, left-hand column, paragraph 2 - page 1091, right-hand column, paragraph 3 * | 1-12 | |
| A | LE MEUR ET AL: "Predicting visual fixations on video based on low-level visual features", VISION RESEARCH, PERGAMON PRESS, OXFORD, GB, vol. 47, no. 19, 1 September 2007 (2007-09-01), pages 2483-2498, XP022237937, ISSN: 0042-6989, DOI: 10.1016/J.VISRES.2007.06.015 * page 2490, left-hand column, paragraph 3.3; figures 1,5 * | 1-12 | |
| A | EP 1 679 659 A1 (THOMSON LICENSING [FR]) 12 July 2006 (2006-07-12) * page 4, line 40 - line 41 * * page 6, line 14 - line 21 * | 1-12 | |

-/--

TECHNICAL FIELDS SEARCHED (IPC)

The present search report has been drawn up for all claims

| Place of search | Date of completion of the search | Examiner |
|---|---|---|
| Berlin | 23 October 2012 | Gries, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

# EUROPEAN SEARCH REPORT

Application Number

EP 12 18 3905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | HU, B.: "Visual Saliency Detection Via Tensor Decomposition", INTERNET CITATION, 7 December 2011 (2011-12-07), pages 1-3, XP007919967, Retrieved from the Internet: URL:http://www.it-paper.com/visual-saliency-detection-via-tensor-decomposition.html [retrieved on 2011-12-21] * abstract * ----- | 1,2 | |

TECHNICAL FIELDS
SEARCHED (IPC)

The present search report has been drawn up for all claims

| Place of search | Date of completion of the search | Examiner |
|---|---|---|
| Berlin | 23 October 2012 | Gries, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 18 3905

This annex lists the patent family members relating to the patent documents cited in the above-mentioned European search report.
The members are as contained in the European Patent Office EDP file on
The European Patent Office is in no way liable for these particulars which are merely given for the purpose of information.

23-10-2012

| Patent document cited in search report | | Publication date | Patent family member(s) | | Publication date |
|---|---|---|---|---|---|
| US 2009110269 | A1 | 30-04-2009 | CN | 101218605 A | 09-07-2008 |
| | | | EP | 1899915 A1 | 19-03-2008 |
| | | | FR | 2888375 A1 | 12-01-2007 |
| | | | JP | 5011287 B2 | 29-08-2012 |
| | | | JP | 2009500736 A | 08-01-2009 |
| | | | KR | 20080030604 A | 04-04-2008 |
| | | | US | 2009110269 A1 | 30-04-2009 |
| | | | WO | 2007003651 A1 | 11-01-2007 |
| US 2004088726 | A1 | 06-05-2004 | NONE | | |
| EP 1679659 | A1 | 12-07-2006 | EP | 1679659 A1 | 12-07-2006 |
| | | | WO | 2006072536 A1 | 13-07-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRUCE, NDB ; TSOTSOS, JK.** Saliency based on information maximization. *Advances in neural information processing systems,* 2006, 155-162
- **ITTI L. ; KOCH C. ; NIEBUR E.** Model of saliency-based visual attention for rapid scene analysis. *IEEE Trans Pattern Anal Mach Intell.,* 1998, vol. 20 (11), 1254-9

- **FABRICE U. et al.** Medium Spatial Frequencies, a Strong Predictor of Salience. *Cognitive Computation,* 2011, vol. 3 (1), 37-47
- **Z. HE.** p-domain rate-distortion analysis and rate control for visual coding and communication. *PhD-Thesis,* 2001